# EUROPÄISCHE PATENTSCHRIFT

(11) **EP 2 939 374 B1**
(45) Veröffentlichungstag und Bekanntmachung des Hinweises auf die Patenterteilung: **26.07.2017**
(21) Anmeldenummer: 12812872.5
(22) Anmeldetag: 24.12.2012
(51) Int. Cl.: H04L 12/40

(54) **FELDEINHEIT UND VERFAHREN ZUM BETREIBEN EINES AUTOMATISIERUNGSSYSTEMS**
FIELD UNIT AND A METHOD FOR OPERATING AN AUTOMATION SYSTEM
UNITÉ DE TERRAIN, ET PROCÉDÉ POUR FAIRE FONCTIONNER UN SYSTÈME D'AUTOMATISATION

(43) Veröffentlichungstag der Anmeldung: 04.11.2015
(73) Patentinhaber: Festo AG & Co. KG, 73734 Esslingen (DE)
(72) Erfinder: GEHRKE, Martin, 71383 Weinstadt (DE)
(74) Vertreter: Patentanwälte Magenbauer & Kollegen Partnerschaft mbB
(86) Internationale Anmeldenummer: PCT/EP2012/005374
(87) Internationale Veröffentlichungsnummer: WO 2014/101925

(56) Entgegenhaltungen:
- EP-A1- 1 701 270
- EP-A1- 2 302 841

## Beschreibung

Die Erfindung betrifft ein Feldeinheit mit einem Busknoten. Ferner betrifft die Erfindung ein Verfahren zum Betreiben eines derartigen Automatisierungssystems.

Bei der DE 10 2009 042 354 A1 / EP 2302841 A1 erfolgt eine Koordination der Kommunikation mittels eines nichtsicheren Kommunikationsmasters, der die Routing-Informationen für die Verteilung der Datenpakete zwischen den sicheren Busteilnehmern erstellt und verwaltet. Die Vorgabe der Routing-Informationen erfolgt hardwareseitig in den angeschlossenen Modulen.

Das Dokument EP1701270 A1, beschreibt ein Verfahren zur Kopplung von wenigstens zwei (Feld-)Bus-/Netzwerksystemen mit jeweils unterschiedlichen Sicherheitsmechanismen. Die zwischen den unterschiedlichen Systembasierten Sicherheitsmechanismen zu übertragenden Sicherheitsdaten werden unter zusätzlicher Nutzung einer definierten, jedoch Systemunabhängigen sicheren Datenstruktur verarbeitet.

Bei der DE 10 2009 054 157 B3 ist die sichere Kommunikation auf der Feldbusebene vorgesehen.

Bei der EP 1 927 914 A2 wird eine Überprüfung der Funktion einer Bussystem-Steuerungseinheit durch ein in den internen Bus oder in einen separaten Bus eingeschleiftes Sicherheitsmodul gewährleistet.

Die DE 19927635 A1 offenbart ein sicherheitsbezogenes Automatisierungssystem, welches mit einer geringen Hardware-Redundanz auskommt und flexibel an die jeweiligen Anfordernisse angepasst werden kann. Hierzu umfasst das Automatisierungssystem zumindest einen Sicherheitsanalysator, der mittels einer Schnittstelle an den Bus angeschlossen ist und den Datenfluss über den Bus mithört, wobei der Analysator zum Ausführen von sicherheitsbezogenen Funktionen eingerichtet ist. Das Automatisierungssystem zeichnet sich dadurch aus, daß die Standardsteuereinrichtung zumindest einen sicherheitsbezogenen Ausgang ansteuert und der Sicherheitsanalysator zur Überprüfung und/oder zum Verarbeiten von sicherheitsbezogenen Daten im Busdatenstrom ausgebildet ist.

Die Aufgabe der Erfindung besteht darin, ein Feldeinheit sowie ein Verfahren zum Betreiben eines Automatisierungssystems anzugeben, bei denen mit einfach aufgebauten, sicherheitsgerichteten Komponenten sowohl nicht sicherheitsgerichtete als auch sicherheitsgerichtete Daten und Datenpakete an Funktionsmodule weitergeleitet werden können.

Diese Aufgabe wird gemäß einem ersten Erfindungsaspekt für eine Feldeinheit der eingangs genannten Art mit den Merkmalen des Anspruchs 1 gelöst. Hierbei ist vorgesehen, dass der Busknoten für eine Signalumsetzung zwischen einem externen Busprotokoll zur Kommunikation mit einer übergeordneten Steuereinrichtung und einem internen Busprotokoll zur Kommunikation mit wenigstens einem Funktionsmodul derart ausgebildet ist, dass längs eines internen Bussystems mittels des internen Busprotokolls eine sequentielle Übertragung von Datenpaketen vorgenommen wird, sowie mit Funktionsmodulen, die dem Busknoten zugeordnet sind und die für eine Verarbeitung von Datenpaketen, die über das interne Bussystem übertragen werden und für eine unidirektionale oder bidirektionale Signalübertragung mit wenigstens einer nachgeordneten Funktionskomponente ausgebildet sind, der Busknoten derart für eine Unterscheidung von Datenpaketen der übergeordneten Steuereinrichtung ausgebildet ist, dass im Busknoten eine Verarbeitung und/oder Weiterleitung von nicht sicherheitsgerichteten Datenpaketen an das interne Bussystem und eine Weiterleitung von sicherheitsgerichteten Datenpaketen an das interne Bussystem erfolgt und dass wenigstens ein mit dem internen Bussystem verbundenes Funktionsmodul derart als Sicherheitsmodul ausgebildet ist, dass in diesem Funktionsmodul bei einem Eintreffen eines sicherheitsgerichteten Datenpakets eine Umsetzung der im Datenpaket enthaltenen Daten zwischen einem von der Steuerungseinrichtung vorgegebenen externen Sicherheitsprotokoll und einem internen Sicherheitsprotokoll der sicherheitsgerichteten Funktionsmodule erfolgt und anschließend ein modifiziertes sicherheitsgerichtetes Datenpaket an das sicherheitsgerichtete Funktionsmodul und/oder die sicherheitsgerichtete Funktionskomponente und/oder an die Steuerungseinrichtung ausgesendet wird.

Der Busknoten muss somit dazu eingerichtet sein, sicherheitsgerichtete Datenpakete, die von einer Steuereinrichtung, insbesondere einer auch als SPS bezeichneten speicherprogrammierbaren Steuerung, über ein externes Bussystem bereitgestellt werden, von ebenfalls von dieser Steuereinrichtung bereitgestellten, nicht sicherheitsgerichteten Datenpaketen zu unterscheiden. Ein eintreffendes, nicht sicherheitsgerichtetes Datenpaket kann vom Busknoten direkt verarbeitet werden und über das interne Bussystem gemäß dem internen Busprotokoll an anzusprechende Funktionsmodule weitergeleitet werden.

Im Falle eines Eintreffens eines sicherheitsgerichteten Datenpakets hat der Busknoten keine Verarbeitung der darin enthaltenen Daten vorzunehmen, sondern leitet das Datenpaket zumindest inhaltlich unverändert an das interne Bussystem weiter. Bei dieser Weiterleitung kann eventuell eine Anpassung der äußeren Form des Datenpaktes an die Anforderungen des internen Busprotokolls vorgenommen werden, dabei greift der Busknoten jedoch weder auf Inhalte dieses sicherheitsgerichteten Datenpakets zu, noch modifiziert er diese Inhalte.

Dadurch ist der Busknoten gemäß dem üblichen Verständnis in der Sicherheitstechnik nicht als sicherheitsgerichtete Systemkomponente anzusehen und unterliegt damit nicht den strengen Anforderungen, die gemäß eines vorgebbaren Sicherheitsstandards an sicherheitsgerichtete Systemkomponenten zu stellen sind. Hierdurch ergeben sich erhebliche Vorteile für die Konzeption, Konstruktion und Herstellung des Busknotens, da dieser zwar die üblichen Anforderungen an Komponenten von Feldeinheiten erfüllen muss, nicht jedoch die Anforderungen, wie sie zur Erlangung des vorgebbaren Sicherheitsstandards einzuhalten sind.

Vorzugsweise ist der Busknoten zusätzlich dazu eingerichtet, von Funktionsmodulen über das interne Bussystem bereitgestellte sicherheitsgerichtete Datenpakete über das externe Bussystem an die Steuerungseinrichtung weiterzuleiten. Auch hierbei ist keine inhaltliche Veränderung des jeweiligen sicherheitsgerichteten Datenpakets durch den Busknoten vorgesehen. Gegebenenfalls ist der Busknoten dazu eingerichtet, die über das interne Bussystem bereitgestellten sicherheitsgerichteten Datenpakte an die Anforderungen des externen Busprotokolls anzupassen. Ein inhaltlicher Eingriff des Busknoten in das jeweilige sicherheitsgerichtete Datenpaket findet dabei nicht statt.

Vorteilhafte Weiterbildungen der Erfindung sind Gegenstand der Unteransprüche.

Bevorzugt sind die Funktionsmodule jeweils mit Busschnittstellen zum Empfang und zur Weiterleitung von Datenpakten versehen und das Sicherheitsmodul ist für einen Empfang von sicherheitsgerichteten Datenpaketen sowie für eine Verarbeitung und Weiterleitung von verarbeiteten, sicherheitsgerichteten Datenpaketen gemäß dem internen Busprotokoll über das interne Bussystem an, insbesondere sicherheitsgerichtete, Funktionsmodule ausgebildet.

Die Funktionsmodule und somit auch die Sicherheitsmodule stellen mit ihren Busschnittstellen die elektrische und/oder elektronische Funktionalität für den Transport von Datenpaketen über das interne Bussystem zur Verfügung. Vorzugsweise ist jedes der Funktionsmodule mit wenigstens einem mehrpoligen Steckverbinder und/oder mit einem Funkmodul sowie mit einem Mikrocontroller oder Mikroprozessor ausgestattet, um einen Empfang, gegebenenfalls eine Verarbeitung, und eine Weiterleitung von Datenpaketen zur Kommunikation mit weiteren Funktionsmodulen zu ermöglichen. Eine Datenverbindung zwischen benachbart angeordneten Funktionsmodulen kann dementsprechend kabelgebunden und/oder drahtlos vorgesehen sein.

Die Busschnittstelle in dem wenigstens einen Sicherheitsmodul ermöglicht dementsprechend auch den Empfang und die Weiterleitung von eintreffenden Datenpaketen. Darüber hinaus findet im Sicherheitsmodul mittels einer Verarbeitungseinrichtung, die insbesondere den für die Buskommunikation vorgesehenen Mikrocontroller oder Mikroprozessor umfasst, eine Verarbeitung von eintreffenden Datenpaketen, insbesondere ausschließlich von eintreffenden sicherheitsgerichteten Datenpaketen, sowie eine Weiterleitung der, insbesondere verarbeiteten, Datenpakete statt. Die eintreffenden sicherheitsgerichteten Datenpakete werden auch als primäre Datenpakete bezeichnet, die direkt und inhaltlich unverändert von der Steuereinrichtung an das jeweilige Sicherheitsmodul bereitgestellt werden und dort durch die vorgesehene Verarbeitung in sekundäre Datenpakete umgewandelt werden.

Vorzugsweise ist die Verarbeitungseinrichtung im Sicherheitsmodul dazu ausgebildet, Daten aus den sicherheitsgerichteten Datenpaketen zu extrahieren und hinsichtlich ihrer Codierung so umzuwandeln, dass sie von nachgelagert angeordneten sicherheitsgerichteten Funktionsmodulen verarbeitet werden können. Die sekundären sicherheitsgerichteten Datenpakete werden über das interne Bussystem an nachgelagerte Funktionsmodule, insbesondere an sicherheitsgerichtete Funktionsmodule, weitergeleitet.

Ferner kann die Verarbeitungseinrichtung des Sicherheitsmoduls dazu ausgebildet sein, Daten von nachgelagerten Funktionsmodulen, insbesondere von sicherheitsgerichteten Funktionsmodulen, gegebenenfalls zunächst zu verarbeiten und jedenfalls in entsprechende Datenpakete, insbesondere in sicherheitsgerichtete Datenpakte, einzubinden, um anschließend eine Weiterleitung dieser Datenpakete über die Schnittstelle und das interne Bussystem an den Busknoten zu veranlassen, wobei die Datenpakete als primäre Datenpakete bezeichnet werden können, wenn sie für eine Weiterleitung an die Steuerungseinrichtung vorgesehen sind, was der Normalfall ist.

Zweckmäßig ist es, wenn das Sicherheitsmodul eine Eingangsschnittstelle und/oder eine Ausgangsschnittstelle für eine direkte, unidirektionale oder bidirektionale, insbesondere elektrische und/oder optische, Kopplung mit einer nachgeordneten Funktionskomponente aufweist. Die Funktionskomponente dient insbesondere zur unmittelbaren Ermittlung eines sicherheitsgerichteten Messwerts und/oder zur unmittelbaren Ausführung einer sicherheitsgerichteten Funktion. Beispielsweise kann die Funktionskomponente zur Abschaltung einer Energieversorgung für einen sicherheitsrelevanten Aktor ausgebildet sein und/oder umfasst einen sicherheitsgerichteten Sensor, beispielsweise einen Positions- oder Druck- oder Temperatursensor. Dieser sicherheitsgerichtete Sensor wird beispielsweise zur Überwachung.eines sicherheitskritischen Prozesses eingesetzt, das Sensorsignal wird in dem Sicherheitsmodul verarbeitet, um eine Sicherheitsfunktion auszulösen, und/oder wird als Bestandteil eines sicherheitsgerichteten Datenpakets an ein weiteres Sicherheitsmodul und/oder an die Steuereinrichtung weitergeleitet.

Bei einer Weiterbildung der Erfindung ist vorgesehen, dass das Sicherheitsmodul für eine Verarbeitung von wenigstens zwei unterschiedlichen Sicherheitsprotokollen ausgebildet ist. Somit kann eine Integration der Feldeinheit, die den Busknoten und wenigstens einem Sicherheitsmodul umfasst, in unterschiedliche Automatisierungssysteme erfolgen ,die mit unterschiedlichen sicherheitsgerichteten Busprotokollen wie beispielsweise CIP-Safety, PROFIsafe, FSoE (Fail Safe over EtherCAT), OpenSafety arbeiten. In dem entsprechend ausgebildeten Sicherheitsmodul ist die Verarbeitung von mindestens zwei derartig codierten sicherheitsgerichteten Datenpaketen möglich, die von einer dem Automatisierungssystem zugehörigen Steuereinrichtung bereitgestellt werden.

In weiterer Ausgestaltung der Erfindung ist das Sicherheitsmodul für eine Verarbeitung eines frei vorgebbaren, sicherheitsgerichteten Computerprogramms und/oder für eine Bereitstellung eines sicherheitsgerichteten Laufzeitsystems ausgebildet. Hierdurch kann eine einfache Anpassung des jeweiligen Sicherheitsmoduls an unterschiedliche Automatisierungssysteme vorgenommen werden. Ergänzend oder alternativ kann die Verarbeitung der sicherheitsgerichteten Datenpakete in dem Sicherheitsmodul durch das frei vorgebbare sicherheitsgerichtete Computerprogramm vorgenommen werden, so dass ein Benutzer das Sicherheitsmodul auf seine spezifischen Bedürfnisse anpassen kann. Besonders vorteilhaft ist es, wenn das Sicherheitsmodul für eine Bereitstellung eines sicherheitsgerichteten Laufzeitsystems ausgebildet ist, in dem eine vorgebbare Applikation zur Verarbeitung von Daten aus dem sicherheitsgerichteten Datenpaket ablaufen kann. Durch die Bereitstellung eines sicherheitsgerichteten Laufzeitsystems kann gewährleistet werden, dass die wenigstens eine im Sicherheitsmodul ablaufende Applikation, bei der es sich um ein auf das Laufzeitsystem angepasstes Computerprogramm handelt, nicht in unzulässiger Weise auf andere Funktionen des Sicherheitsmoduls zugreifen kann und dessen Funktionsweise in Frage stellen kann. Vorzugsweise ist das Laufzeitsystem derart ausgebildet, dass Applikationen nur dann im Sicherheitsmodul ablaufen können, wenn sie von einer definierten Quelle, beispielsweise von einer sicheren Datenbank, drahtlos oder drahtgebunden auf das Sicherheitsmodul aufgespielt und dort gespeichert werden.

Vorteilhaft ist es, wenn das Sicherheitsmodul, insbesondere mittels eines sicherheitsgerichteten Laufzeitsystems, für eine Verarbeitung von Signalen von sicherheitsgerichteten Funktionsmodulen und/oder Funktionskomponenten und/oder von Funktionsmodulen und/oder Funktionskomponenten ausgebildet ist. Damit können auch Daten, insbesondere in Form von Sensorsignalen, die von Funktionsmodulen und/oder Funktionskomponenten stammen, in Datenpakete integriert werden, die als nicht sicherheitsgerichtete oder als sicherheitsgerichtete Datenpakete über das interne Bussystem an nachgelagerte Funktionsmodule oder an den Busknoten weitergeleitet werden.

Bevorzugt sind dem Busknoten sowohl Funktionsmodule, die entsprechend einem ersten Sicherheitsniveau eines vorgebbaren Sicherheitsstandards ausgebildet sind und wenigstens ein Sicherheitsmodul, das entsprechend einem zweiten Sicherheitsniveau des vorgebbaren Sicherheitsstandards ausgebildet ist, zugeordnet, wobei das zweite Sicherheitsniveau für eine höhere Sicherheit als das erste Sicherheitsniveau ausgelegt ist.

Die Aufgabe der Erfindung wird gemäß einem zweiten Aspekt durch ein Verfahren zum Betreiben eines Automatisierungssystems gelöst. Für dieses Automatisierungssystem sind ein erster Datenaustausch zwischen einer übergeordneten Steuereinrichtung und einem Busknoten, insbesondere mittels eines Feldbussystems, ein zweiter Datenaustausch zwischen dem Busknoten und wenigstens einem Funktionsmodul, insbesondere mittels eines internen Bussystems, und ein dritter Datenaustausch zwischen dem wenigstens einen Funktionsmodul und wenigstens einer Funktionskomponente, insbesondere mittels des internen Bussystems, vorgesehen, wobei von der Steuereinrichtung und/oder von wenigstens einem als Sicherheitsmodul ausgebildeten Funktionsmodul Datenpakete sowie sicherheitsgerichtete Datenpakete an den Busknoten bereitgestellt werden und der Busknoten die sicherheitsgerichteten Datenpakete inhaltlich unverändert an das Sicherheitsmodul oder an die Steuereinrichtung weiterleitet, wobei in dem Sicherheitsmodul eine Verarbeitung von sicherheitsgerichteten Datenpaketen derart stattfindet, dass sicherheitsgerichtete Daten, insbesondere über das interne Bussystem, an sicherheitsgerichtete Funktionsmodule und/oder an sicherheitsgerichtete Funktionskomponenten weitergeleitet werden und/oder sicherheitsgerichtete Daten von den sicherheitsgerichteten Funktionsmodulen und/oder Funktionskomponenten im Sicherheitsmodul in die sicherheitsgerichteten Datenpakete aufgenommen werden, um die sicherheitsgerichteten Datenpakete über den Busknoten an die Steuereinrichtung weiterzuleiten, wobei das Sicherheitsmodul bei einem Eintreffen eines sicherheitsgerichteten Datenpakets eine Umsetzung der im Datenpaket enthaltenen Daten zwischen einem von der Steuerungseinrichtung vorgegebenen externen Sicherheitsprotokoll und einem internen Sicherheitsprotokoll der sicherheitsgerichteten Funktionsmodule vornimmt und anschließend ein modifiziertes sicherheitsgerichtetes Datenpaket an das sicherheitsgerichtete Funktionsmodul und/oder die sicherheitsgerichtete Funktionskomponente und/oder an die Steuerungseinrichtung aussendet.

In weiterer Ausgestaltung des Verfahrens ist vorgesehen, dass der Datenaustausch zwischen dem Busknoten und dem wenigstens einen Funktionsmodul mittels eines internen Bussystems erfolgt, bei dem sicherheitsgerichtete und nicht sicherheitsgerichtete Datenpakete sequentiell übertragen werden.

In weiterer Ausgestaltung des Verfahrens ist vorgesehen, dass das Sicherheitsmodul eine Verarbeitung oder eine automatische Erkennung und Verarbeitung von sicherheitsgerichteten Datenpaketen vornimmt, die entsprechend einem von wenigstens zwei unterschiedlichen, im Sicherheitsmodul gespeicherten externen Sicherheitsprotokollen codiert sind.

In weiterer Ausgestaltung des Verfahrens ist vorgesehen, dass das Sicherheitsmodul eine Laufzeitumgebung für wenigstens ein, insbesondere austauschbares, Programmmodul bereitstellt, das zur Verarbeitung der eintreffenden Datenpakete ausgebildet ist.

Eine vorteilhafte Ausführungsform der Erfindung ist in der Zeichnung dargestellt. Dabei zeigt:
- Figur 1: eine schematische Darstellung eines Automatisierungssystem mit einer übergeordneten Steuereinrichtung, einem mit der Steuereinrichtung gekoppelten Busknoten und mehreren mit dem Busknoten gekoppelten Funktionsmodulen, und
- Figur 2: eine Ausschnittvergrößerung der Figur 1 mit einem zugeordneten Schema zur Darstellung des Datentransports zwischen dem Busknoten und den Funktionsmodulen.

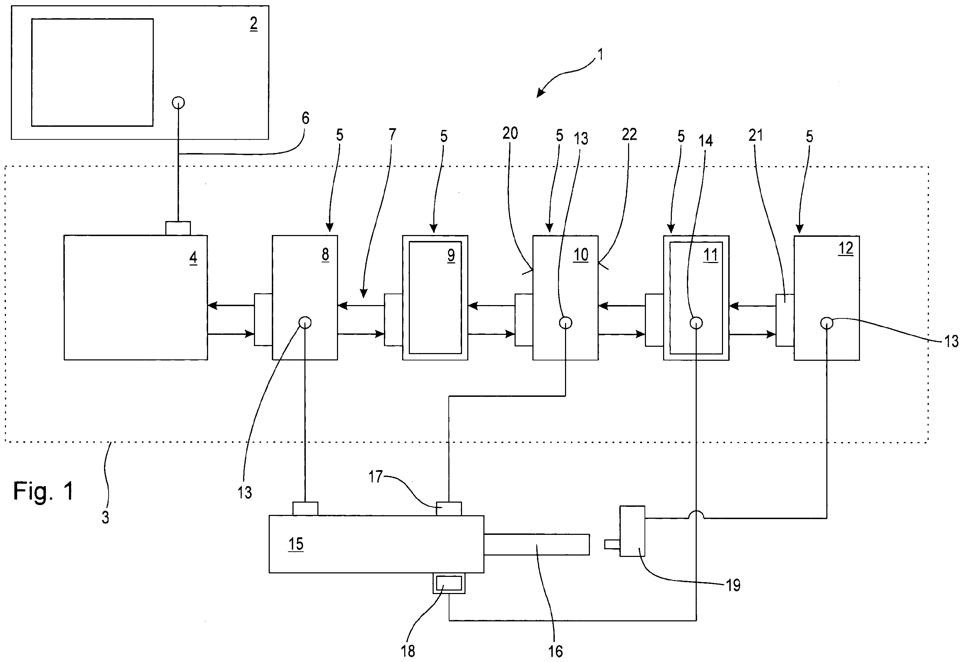

Ein in der Figur 1 dargestelltes Automatisierungssystem 1 ist für den Betrieb einer nicht näher dargestellten komplexen Anlage, beispielsweise eines chemischen Reaktors oder einer Montagezelle ausgebildet. Hierzu umfasst das Automatisierungssystem 1 wenigstens eine Steuereinrichtung 2, die insbesondere in Form einer auch als SPS bezeichneten speicherprogrammierbaren Steuerung ausgebildet sein kann und die für eine Koordination einer oder mehrerer Feldeinheiten vorgesehen ist.

Exemplarisch ist eine Feldeinheit 3 als Anordnung eines Busknotens 4 und mehrerer mit dem Busknoten 4 gekoppelten Funktionsmodule 5 ausgebildet. Dabei ist für eine, insbesondere kabelgebundene, Übertragung von vorzugsweise elektrischen Signalen zwischen der Steuereinrichtung 2 und der Feldeinheit 3 ein externes elektrisches Kommunikationssystem 6 vorgesehen, das exemplarisch als Feldbus ausgebildet ist und das eine bidirektionale Signalübertragung zwischen der Steuereinrichtung 2 und der Feldeinheit 3 gemäß einem vorgebbaren Feldbusprotokoll ermöglicht. Für eine Übertragung von, vorzugweise elektrischen, Signalen zwischen dem in der Feldeinheit 3 enthaltenen Busknoten 4 und den Funktionsmodulen 5 ist ein internes elektrisches Kommunikationssystem 7, insbesondere ein proprietärer Kommunikationsbus, vorgesehen.

Dabei dient der Busknoten 4 zur Signalumsetzung zwischen dem externen Feldbusprotokoll und einem internen KommunikationsBusprotokoll und ermöglicht somit einen Datenaustausch zwischen wenigstens einem Funktionsmodul 5 und der Steuereinrichtung 2. Vorzugsweise sind sowohl das externe Feldbusprotokoll als auch das interne Kommunikationsbusprotokoll dazu ausgebildet, längs jeweiligen Bussystems 6, 7 eine sequentielle Übertragung von Datenpaketen zu ermöglichen.

Die Funktionsmodule 5 sind für unterschiedliche Funktionen ausgebildet und werden nachstehend mit ihren exemplarisch zugeordneten Funktionen näher beschrieben.

Ein erstes Funktionsmodul ist als Ansteuerung für einen elektrischen Antrieb 15, insbesondere als Motorcontroller 8, ausgebildet und ermöglicht die Bereitstellung von Steuerbefehlen mittels einer Schnittstelle 13 und einer Kabelverbindung an diesen Antrieb 15, um eine Linearbewegung einer Antriebsstange 16 mit vorgebbarer Bewegungsrichtung und/oder Bewegungsgeschwindigkeit zu bewirken.

Ein zweites Funktionsmodul ist als Sicherheitsmodul 9 ausgebildet und dient dazu, sicherheitsgerichtete Befehle von der Steuereinrichtung 2 für nachgeordnete sicherheitsgerichtete Funktionsmodule zu verarbeiten.

Ein drittes Funktionsmodul ist als Eingabe-/Ausgabemodul 10 zum Empfang von Sensorsignalen und/oder zur Ausgabe von elektrischen Steuerbefehlen über eine Schnittstelle 13 ausgebildet und wird in der Feldeinheit 3 exemplarisch zum Empfang von elektrischen Signalen eines Endlagenschalters 17 eingesetzt, der ein Signal ausgibt, wenn die Antriebsstange 16 eine vorgebbare Endlage erreicht.

Ein viertes Funktionsmodul ist als sicherheitsgerichtetes Eingabe-/Ausgabemodul 11 ausgebildet und dient zum Empfang von elektrischen Signalen eines sicherheitsgerichteten Endlagenschalters 18, der ein Signal ausgibt, wenn die Antriebsstange 16 eine vorgebbare Endlage erreicht. Hierzu ist das sicherheitsgerichtete Eingabe-/Ausgabemodul 11 mit einer sicherheitsgerichteten Schnittstelle 14 ausgerüstet.

Ein fünftes Funktionsmodul ist wie das dritte Funktionsmodul als Eingabe-/Ausgabemodul 12 zum Empfang von Sensorsignalen und/oder zur Ausgabe von elektrischen Steuerbefehlen über eine Schnittstelle 13 ausgebildet und wird in der Feldeinheit 3 exemplarisch zum Empfang von elektrischen Signalen eines Endlagenschalters 19 eingesetzt, der ein Signal ausgibt, wenn die Antriebsstange 16 eine vorgebbare Endlage erreicht.

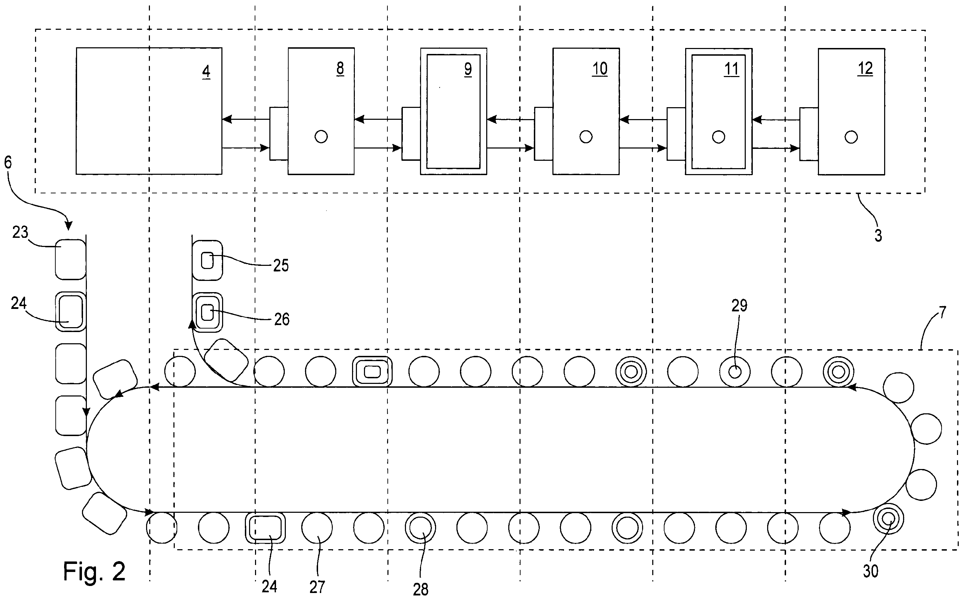

Die Funktionsmodule 8 bis 12 kommunizieren untereinander mittels des internen Kommunikationssystems 7, wobei exemplarisch an jedem der Funktionsmodule 8 bis 12 an einer ersten Seitenoberfläche 20 ein erhaben abragender Stecker 21 und an einer der ersten Seitenoberfläche 20 entgegengesetzten zweiten Seitenoberfläche 22 eine nicht dargestellte Steckbuchse vorgesehen ist. Sowohl der Stecker 21 als auch die Buchse sind als elektrische Busschnittstellen ausgebildet und sind mit einer in jedem der Funktionsmodule 8 bis 12 ausgebildeten, nicht dargestellten Bussteuerschaltung bzw. einem Buscontroller elektrisch verbunden. In den Figuren 1 und 2 sind die Funktionsmodule 8 bis 12 aus Gründen einer verbesserten Darstellung beabstandet voneinander eingezeichnet, um die Buskommunikation zwischen den Funktionsmodulen 8 bis 12 mit den eingezeichneten Pfeilen verdeutlichen zu können. In der praktischen Anwendung bilden der Busknoten 4 und die Funktionsmodule 8 bis 12 eine kompakte Baueinheit ohne Zwischenräume zwischen dem Busknoten 4 und den daran aufgereiht angeordneten Funktionsmodulen 8 bis 12. Bei einer nicht dargestellten Ausführungsform sind der Busknoten und/oder die Funktionsmodule räumlich voneinander getrennt angeordnet und sind durch Verbindungskabel und/oder Funkstrecken signalübertragend miteinander verbunden.

Da das Automatisierungssystem 1 exemplarisch für die Ansteuerung des elektrischen Antriebs 15 eingesetzt werden kann und dieser elektrische Antrieb 15 je nach Einbausituation bei Auftreten einer Fehlfunktion ein Gefährdungspotential für seine Umgebung, gegebenenfalls auch für einen Bediener des Automatisierungssystems 1 bedeutet, sind sowohl die Steuereinrichtung 2 als auch die Feldeinheit 3 für einen sicherheitsgerichteten Betrieb des elektrischen Antriebs 15 eingerichtet.

Hierzu werden von der Steuereinrichtung 2 normale oder nicht sicherheitsgerichtete Datenpakte mit normalen, nicht sicherheitsgerichteten Daten wie beispielsweise Steuerbefehlen, sowie sicherheitsgerichtete Datenpakete mit sicherheitsgerichteten Daten, insbesondere mit sicherheitsgerichteten Steuerbefehlen, an die Feldeinheit 3 bereitgestellt. Die Feldeinheit 3 dazu eingerichtet, die Datenpakte und die sicherheitsgerichteten Datenpakte zu verarbeiten und gegebenenfalls Datenpakete, insbesondere sicherheitsgerichtete Datenpakete, an die Steuereinrichtung 2 zurückzusenden, beispielsweise für den Fall einer Störung des elektrischen Antriebs 15.

Um eine sicherheitsgerichtete Funktion der Feldeinheit 3 zu gewährleisten, könnte in Erwägung gezogen werden, sämtliche Komponenten der Feldeinheit 3 als sicherheitsgerichtete Komponenten auszubilden. Da jedoch die Vielfalt der Komponenten, insbesondere der Funktionsmodule, groß ist und ferner für die Kommunikation zwischen unterschiedlichen Steuereinrichtungen 2 und der Feldeinheit 3 unterschiedliche Feldbusprotokolle zum Einsatz kommen können, würde eine derartige Auslegung der gesamten Feldeinheit 3 als sicherheitsgerichtete Feldeinheit 3 einen erheblichen Aufwand bedeuten sowie stets eine Anpassung an das jeweilige Feldbusprotokoll erfordern.

Das sicherheitsgerichtete Automatisierungssystem 1, wie es schematisch in den Figuren 1 und 2 dargestellt ist, beruht auf dem Konzept, dass sicherheitsgerichtete Datenpakete von einem als Sicherheitsmodul 9 ausgebildeten Funktionsmodul verarbeitet werden und an angeschlossene sicherheitsgerichtete Funktionsmodule wie das sicherheitsgerichtete Eingang-/Ausgangsmodul 11 weitergeleitet werden. Dabei ist der Busknoten 4 derart eingerichtet, dass er eintreffende sicherheitsgerichtete Datenpakete erkennt und zumindest diese sicherheitsgerichtete Datenpakete nicht verarbeitet, sondern inhaltlich unverändert an das interne Kommunikationssystem 7 weiterleitet. Vorzugsweise ist der Busknoten 4 derart eingerichtet, dass er neben den sicherheitsgerichteten Datenpaketen auch andere, insbesondere entsprechend markierte, nicht sicherheitsgerichtete Datenpakete unverarbeitet weiterleitet.

Diese Funktionsweise des Automatisierungssystems 1 ist in der Figur 2 stark schematisiert wiedergegeben. Dabei ist das interne Kommunikationssystem 7 als offene Schleife dargestellt, entlang derer unterschiedlich ausgeprägte Datenpakete vom Busknoten 4 an die Funktionsmodule 5 weiterleitet und von den Funktionsmodulen 5 wieder zum Busknoten 4 zurückgeleitet werden. In das interne Kommunikationssystem 7 können über den Busknoten 4 Datenpakete aus einem externen Kommunikationssystem, beispielsweise einem Feldbussysstem, eingespeist werden. Ferner können mit Hilfe des Busknotens 4 Datenpakete vom internen Kommunikationssystem 7 an das externe Kommunikationssystem ausgegeben werden.

Das mit der in Figur 2 nicht dargestellten Steuereinrichtung 2 verbundene externe Kommunikationssystem 6 ist dazu eingerichtet, unterschiedlich ausgeprägte Datenpakete zu übertragen. Die von der Steuereinrichtung 2 ausgegebenen Steuerbefehle können in externen Datenpaketen 23 übertragen werden, die dem Busknoten 4 bereitgestellt werden. Sicherheitsgerichtete Steuerbefehle der Steuereinrichtung 2 werden in externen sicherheitsgerichteten Datenpaketen 24 an den Busknoten 4 übertragen.

Im Busknoten 4 werden die externen Datenpakete 23 in Abhängigkeit von der Codierung des externen Kommunikationssystems 6, insbesondere des gewählten Feldbusprotokolls, verarbeitet und die darin enthaltenen Daten in internen Datenpaketen 27 über das interne Kommunikationssystem 7 an die damit anzusprechenden Funktionsmodule 5 weitergeleitet. Beim Eintreffen von externen sicherheitsgerichteten Datenpaketen 24 ist der Busknoten 4 dazu eingerichtet, diese inhaltlich unverändert an das interne Kommunikationssystem 7 weiterzuleiten. Dies wird in der Figur 2 dadurch dargestellt, dass die externen sicherheitsgerichteten Datenpakete 24 auch über das interne Kommunikationssystem 7 weitergeleitet werden.

Je nach Ausgestaltung der externen und internen Kommunikationssysteme 6 und 7 ist möglicherweise die Vornahme von Anpassungen an den eintreffenden externen sicherheitsgerichteten Datenpaketen 24 notwendig, um diese über das interne Kommunikationssystem 7 weiterleiten zu können. Derartige Anpassungen betreffen jedoch stets nur die äußere Konfiguration des jeweiligen sicherheitsgerichteten Datenpakets 24, nicht jedoch dessen Inhalt.

Die über das interne Kommunikationssystem 7 weitergeleiteten externen sicherheitsgerichteten Datenpakete 24 werden erst bei Erreichen des Sicherheitsmoduls 9 geöffnet und verarbeitet. Dabei kann das Sicherheitsmodul 9 dazu eingerichtet sein, externe sicherheitsgerichtete Datenpakete 24 zu verarbeiten, die gemäß unterschiedlichen Feldbusprotokollen und den jeweils zugeordneten Sicherheitsprotokollen wie beispielsweise CIP-Safety, PROFIsafe, FSoE, OpenSafety codiert sind.

Die Auswahl des zu verarbeitenden Feldbusprotokolls kann für das Sicherheitsmodul 9 durch wenigstens eine der Möglichkeiten: hardwaremäßige Vorgabe, softwaremäßige Vorgabe, automatische Erkennung, erfolgen. Eine hardwaremäßige Vorgabe kann beispielsweise mit Hilfe von nicht dargestellten Auswahlschaltern (z.B. DIP-Schalter) vorgenommen werden. Eine softwaremäßige Vorgabe kann durch Aktivierung des jeweiligen Verarbeitungsalgorithmus im Busknoten 4 durch eine externe Programmiereinrichtung und eine drahtgebundene oder drahtlose Datenübertragung zwischen der Programmiereinrichtung und dem Busknoten erfolgen. Beispielsweise kann mit Hilfe eines externen Computers, auf dem ein geeignetes Auswahlprogramm abläuft, eine Auswahl des verwendeten Feldbusprotokolls und des damit verknüpften sicherheitsgerichteten Protokolls vorgenommen werden und diese Auswahl an das Sicherheitsmodul 9 direkt oder über das interne Kommunikationssystem 7 übertragen werden. Besonders vorteilhaft ist es, wenn im Sicherheitsmodul 9 wenigstens zwei unterschiedliche Sicherheitsprotokolle, beispielsweise wenigstens zwei Sicherheitsprotokolle aus der Gruppe CIP-Safety, PROFIsafe, FSoE, OpenSafety, gespeichert sind und eine automatisierte Erkennung des verwendeten Sicherheitsprotokolls durch das Sicherheitsmodul 9 erfolgt.

Die im Sicherheitsmodul verarbeiteten Daten des externen sicherheitsgerichteten Datenpakets 24 werden für die Kommunikation mit nachgelagerten, sicherheitsgerichteten Funktionsmodulen 5 in internen sicherheitsgerichteten Datenpaketen 28 aufgenommen und anschließend über das interne Kommunikationssystem 7 weitergeleitet.

Bei der Übertragung über das interne Kommunikationssystem 7 werden die Datenpakete durch alle Funktionsmodule 5 transportiert. Dabei können beispielsweise im Eingangs-/Ausgangsmodul 10 aus Sensorsignalen des Endlagenschalters 17 gewonnene Daten in ein internes Datenpaket 27 aufgenommen werden. Dabei entstehen geänderte interne Datenpakete 29, die über das interne Kommunikationssystem 7 weitergeleitet werden. Die geänderten internen Datenpakete 29 können im Busknoten 4 in geänderte externe Datenpakete 25 umgewandelt werden, um über das externe Kommunikationssystem 6 an die Steuereinrichtung 2 weitergeleitet zu werden.

Interne sicherheitsgerichtete Datenpakete 28 können nur von entsprechend konfigurierten sicherheitsgerichteten Funktionsmodulen 5 wie dem sicherheitsgerichteten Eingangs-/Ausgangsmodul 11 verändert werden, beispielsweise durch Aufnahme von Daten, die auf Sensorsignale des sicherheitsgerichteten Endlagenschalters 18 zurückgehen. Die sicherheitsgerichteten Datenpakete 28 werden durch Aufnahme von Daten in geänderte, sicherheitsgerichtete Datenpakete 30 gewandelt, die über das interne Kommunikationssystem 7 zum Busknoten 4 weitertransportiert werden.

Exemplarisch ist vorgesehen, dass die geänderten, sicherheitsgerichteten Datenpakete 30 bei der Weiterleitung durch das Sicherheitsmodul 9 in geänderte, externe sicherheitsgerichtete Datenpakete 26 umgewandelt werden, die vom internen Kommunikationssystem 7 zum Busknoten 4 weitertransportiert werden und dort an das externe Kommunikationssystem 6 übergeben werden, um zur Steuereinrichtung 2 geleitet zu werden.

Bei einer ersten Ausführungsform ist das Sicherheitsmodul 9 ausschließlich für eine Umwandlung der externen, sicherheitsgerichteten Datenpakete 24 in interne, sicherheitsgerichtete Datenpakete 28 ausgebildet. Eine über diese Umwandlung der Datenpakete 24, 28 hinausgehende Datenverarbeitung im Sicherheitsmodul 9 ist nicht vorgesehen. Gegebenenfalls ist zusätzlich eine Umwandlung der internen, sicherheitsgerichteten Datenpakete 28 in externe, sicherheitsgerichtete Datenpakete 24 im Sicherheitsmodul 9 vorgesehen, wobei auch hier keine über die Umwandlung der Datenpakete 24, 28 hinausgehende Datenverarbeitung stattfindet.

Bei einer zweiten Ausführungsform ist das Sicherheitsmodul 9 sowohl für die Umwandlung der Datenpakete 24, 28 als auch für eine Verarbeitung der in den Datenpaketen 24 und/oder 28 enthaltenen Daten ausgebildet, wobei die zur Verarbeitung der Daten notwendigen Algorithmen in einem Speicher des Sicherheitsmoduls 9 , insbesondere unveränderlich, abgelegt sind und von einem Prozessor des Sicherheitsmoduls 9 bedarfsabhängig aufgerufen werden.

Bei einer dritten Ausführungsform umfasst das Sicherheitsmodul wenigstens ein Laufzeitsystem, also eine Ablaufumgebung für ein von außen einzuspeisendes Computerprogramm, das auch als "application" oder "app" bezeichnet wird. Dabei ist das Laufzeitsystem vorzugsweise sicherheitsgerichtet ausgebildet, erlaubt also nur solche Ausgaben von Daten und/oder Zugriffe auf Daten durch das von außen einzuspeisende Computerprogramm auf intern im Sicherheitsmodul 9 ablaufende Verarbeitungsvorgänge, die nicht zu einer Gefährdung der sicherheitsgerichteten Funktion des Sicherheitsmoduls 9 führen.

Bei einer nicht dargestellten Ausführungsform ist das Sicherheitsmodul für eine unmittelbare Kommunikation mit einer sicherheitsgerichteten Funktionskomponente ausgebildet und hierzu mit einer entsprechenden Schnittstelle versehen.

## Patentansprüche

1. Feldeinheit mit einem Busknoten (4), der für eine Signalumsetzung zwischen einem externen Busprotokoll zur Kommunikation mit einer übergeordneten Steuereinrichtung (2) und einem internen Busprotokoll zur Kommunikation mit wenigstens einem Funktionsmodul (5) derart ausgebildet ist, dass längs eines internen Bussystems (5) mittels des internen Busprotokolls eine sequentielle Übertragung von Datenpaketen (27, 28, 29, 30) vorgenommen wird, sowie mit Funktionsmodulen (5), die dem Busknoten (4) zugeordnet sind und die für eine Verarbeitung von Datenpaketen (27, 28, 29, 30), die über das interne Bussystem (7) übertragen werden und für eine unidirektionale oder bidirektionale Signalübertragung mit wenigstens einer nachgeordneten Funktionskomponente (15 bis 19) ausgebildet sind, wobei der Busknoten (4) derart für eine Unterscheidung von Datenpaketen (23, 24) der übergeordneten Steuereinrichtung (2) ausgebildet ist, dass im Busknoten (4) eine Verarbeitung und/oder Weiterleitung von nicht sicherheitsgerichteten Datenpaketen (27) an das interne Bussystem (7) und eine Weiterleitung von sicherheitsgerichteten Datenpaketen (24) an das interne Bussystem (7) erfolgt, **dadurch gekennzeichnet, dass** wenigstens ein mit dem internen Bussystem (7) verbundenes Funktionsmodul (5) derart als Sicherheitsmodul (9) ausgebildet ist, dass in diesem Funktionsmodul bei einem Eintreffen eines sicherheitsgerichteten Datenpakets (24) eine Umsetzung der im Datenpaket (24) enthaltenen Daten zwischen einem von der Steuerungseinrichtung (2) vorgegebenen externen Sicherheitsprotokoll und einem internen Sicherheitsprotokoll der sicherheitsgerichteten Funktionsmodule (11) erfolgt und anschließend ein modifiziertes sicherheitsgerichtetes Datenpaket (28) an das sicherheitsgerichtete Funktionsmodul (11) und/oder die sicherheitsgerichtete Funktionskomponente (18) und/oder an die Steuerungseinrichtung (2) ausgesendet wird.

2. Feldeinheit nach Anspruch 1, **dadurch gekennzeichnet, dass** die Funktionsmodule (5) jeweils mit Busschnittstellen (21) zum Empfang und zur Weiterleitung von Datenpakten (24, 27, 28, 29, 30) versehen sind und dass das Sicherheitsmodul (9) für einen Empfang von sicherheitsgerichteten Datenpaketen (24, 28, 30) sowie für eine Verarbeitung und Weiterleitung von verarbeiteten, sicherheitsgerichteten Datenpaketen (28, 30) gemäß dem internen Busprotokoll über das interne Bussystem (7) an, insbesondere sicherheitsgerichtete, Funktionsmodule (11) ausgebildet ist.

3. Feldeinheit nach Anspruch 1 oder 2, **dadurch gekennzeichnet, dass** das Sicherheitsmodul (9) eine Eingangsschnittstelle (14) und/oder eine Ausgangsschnittstelle für eine direkte, unidirektionale oder bidirektionale, insbesondere elektrische und/oder optische, Kopplung mit einer nachgeordneten Funktionskomponente (15 bis 19) aufweist.

4. Feldeinheit nach Anspruch 1, 2 oder 3, **dadurch gekennzeichnet, dass** das Sicherheitsmodul (9) für eine Verarbeitung von wenigstens zwei unterschiedlichen Sicherheitsprotokollen ausgebildet ist.

5. Feldeinheit nach einem der vorhergehenden Ansprüche, **dadurch gekennzeichnet, dass** das Sicherheitsmodul (9) für eine Verarbeitung eines frei vorgebbaren, sicherheitsgerichteten Computerprogramms und/oder für eine Bereitstellung eines sicherheitsgerichteten Laufzeitsystems ausgebildet ist.

6. Feldeinheit nach einem der vorhergehenden Ansprüche, **dadurch gekennzeichnet, dass** das Sicherheitsmodul (9), insbesondere mittels eines sicherheitsgerichteten Laufzeitsystems, für eine Verarbeitung von Signalen von sicherheitsgerichteten Funktionsmodulen (11) und/oder Funktionskomponenten (18) und/oder von Funktionsmodulen (8, 10, 12) und/oder Funktionskomponenten (15, 17, 19) ausgebildet ist.

7. Feldeinheit nach einem der vorhergehenden Ansprüche, **dadurch gekennzeichnet, dass** dem Busknoten (4) sowohl Funktionsmodule (8, 10, 12), die entsprechend einem ersten Sicherheitsniveau eines vorgebbaren Sicherheitsstandards ausgebildet sind und wenigstens ein Sicherheitsmodul (9), das entsprechend einem zweiten Sicherheitsniveau des vorgebbaren Sicherheitsstandards ausgebildet ist zugeordnet sind, wobei das zweite Sicherheitsniveau für eine höhere Sicherheit als das erste Sicherheitsniveau ausgelegt ist.

8. Verfahren zum Betreiben eines Automatisierungssystems, bei dem ein erster Datenaustausch zwischen einer übergeordneten Steuereinrichtung (2) und einem Busknoten (4), insbesondere mittels eines Feldbussystems (6), ein zweiter Datenaustausch zwischen dem Busknoten (4) und wenigstens einem Funktionsmodul (5), insbesondere mittels eines internen Bussystems (7), und ein dritter Datenaustausch zwischen dem wenigstens einen Funktionsmodul (5) und wenigstens einer Funktionskomponente (15, 17, 18, 19), insbesondere mittels des internen Bussystems (7), vorgesehen ist, wobei von der Steuereinrichtung (2) und/oder von wenigstens einem als Sicherheitsmodul (9) ausgebildeten Funktionsmodul (5) Datenpakete (23) sowie sicherheitsgerichtete Datenpakete (24) an den Busknoten (4) bereitgestellt werden und der Busknoten (4) die sicherheitsgerichteten Datenpakete (24) inhaltlich unverändert an das Sicherheitsmodul (9) oder an die Steuereinrichtung (2) weiterleitet, wobei in dem Sicherheitsmodul (9) eine Verarbeitung von sicherheitsgerichteten Datenpaketen (24) derart stattfindet, dass sicherheitsgerichtete Daten, insbesondere über das interne Bussystem (7), an sicherheitsgerichtete Funktionsmodule (11) und/oder an sicherheitsgerichtete Funktionskomponenten (18) weitergeleitet werden und/oder sicherheitsgerichtete Daten von den sicherheitsgerichteten Funktionsmodulen (11) und/oder von den sicherheitsgerichteten Funktionskomponenten (18) im Sicherheitsmodul (9) in die sicherheitsgerichteten Datenpakete (30) aufgenommen werden, um die sicherheitsgerichteten Datenpakete (30) über den Busknoten (4) an die Steuereinrichtung (2) weiterzuleiten, **gekennzeichnet dadurch dass** das Sicherheitsmodul (9) bei einem Eintreffen eines sicherheitsgerichteten Datenpakets (24) eine Umsetzung der im Datenpaket (24) enthaltenen Daten zwischen einem von der Steuerungseinrichtung (2) vorgegebenen externen Sicherheitsprotokoll und einem internen Sicherheitsprotokoll der sicherheitsgerichteten Funktionsmodule (11) vornimmt und anschließend ein modifiziertes sicherheitsgerichtetes Datenpaket (28) an das sicherheitsgerichtete Funktionsmodul (11) und/oder die sicherheitsgerichtete Funktionskomponente (18) und/oder an die Steuerungseinrichtung (2) aussendet.

9. Verfahren nach Anspruch 8, **dadurch gekennzeichnet, dass** der Datenaustausch zwischen dem Busknoten (4) und dem wenigstens einen Funktionsmodul (5) mittels eines internen Bussystems (7) erfolgt, bei dem sicherheitsgerichtete und nicht sicherheitsgerichtete Datenpakete (23, 24, 28, 30) sequentiell übertragen werden.

10. Verfahren nach Anspruch 8, **dadurch gekennzeichnet, dass** das Sicherheitsmodul (9) eine Verarbeitung oder eine automatische Erkennung und Verarbeitung von sicherheitsgerichteten Datenpaketen (24) vornimmt, die entsprechend einem von wenigstens zwei unterschiedlichen, im Sicherheitsmodul gespeicherten externen Sicherheitsprotokollen codiert sind.

11. Verfahren nach einem der Ansprüche 8 bis 10, **dadurch gekennzeichnet, dass** das Sicherheitsmodul (9) eine Laufzeitumgebung für wenigstens ein, insbesondere austauschbares, Programmmodul bereitstellt, das zur Verarbeitung der eintreffenden Datenpakete (24) ausgebildet ist.

## Claims

1. Field unit with a bus node (4), which is so designed for signal transmission between an external bus protocol for communication with a higher-level control device (2) and an internal bus protocol for communication with at least one function module (5) that, along an internal bus system (7), a sequential transmission of data packets (27, 28, 29, 30) is made by means of the internal bus protocol and with function modules (5) which are assigned to the bus node (4) and are designed for the processing of data packets (27, 28, 29, 30) which are transmitted over the internal bus system (7) and designed for unidirectional or bidirectional signal transmission with at least one downstream function component (15 to 19), wherein the bus node (4) is so designed for a differentiation of data packets (23, 24) of the higher-level control device (2) that in the bus node (4) processing and/or onward transmission of non-safety-related data packets (27) to the internal bus system (7) and an onward transmission of safety-related data packets (24) to the internal bus system (7) takes place, **characterised in that** at least one function module (5) connected to the internal bus system (7) is so designed as a safety module (9) that, in this function module, on arrival of a safety-related data packets (24), a conversion of data contained in the data packet (24) takes place between an external safety protocol preset by the control device (2) and an internal safety protocol of the safety-related function module (11), and subsequently a modified safety-related data packet (28) is sent to the safety-related function module (11) and/or the safety-related function component (18) and/or the control device (2).

2. Field unit according to claim 1, **characterised in that** the function modules (5) are each provided with bus interfaces (21) for the receipt and onward transmission of data packets (24, 27, 28, 29, 30), and that the safety module (9) is designed for receipt of safety-related data packets (24, 28, 30) and for processing and onward transmission of processed safety-related data packets (28, 30) via the internal bus protocol to function modules (11), in particular safety-related, in accordance with the internal bus protocol.

3. Field unit according to claim 1 or 2, **characterised in that** the safety module (9) has an input interface (14) and/or an output interface for a direct, unidirectional or bidirectional, in particular electrical and/or optical, connection to a downstream function component (15 to 19).

4. Field unit according to claim 1, 2 or 3, **characterised in that** the safety module (9) is designed for processing at least two different safety protocols.

5. Field unit according to any of the preceding claims, **characterised in that** the safety module (9) is designed for processing of a freely presettable safety-related computer program and/or for provision of a safety-related runtime system.

6. Field unit according to any of the preceding claims, **characterised in that** the safety module (9) is designed, in particular by means of a safety-related runtime system, for the processing of signals of safety-related function modules (11) and/or function components (18) and/or of function modules (8, 10, 12) and/or function components (15, 17, 19).

7. Field unit according to any of the preceding claims, **characterised in that** the bus node (4) is assigned both function modules (8, 10, 12) which are designed in accordance with a first safety level of a presettable safety standard and at least one safety module (9) which is designed in accordance with a second safety level of the presettable safety standard, wherein the second safety level is designed for greater safety than the first safety level.

8. Method of operating an automation system in which there is provided a first data interchange between a higher-level control device (2) and a bus node (4), in particular by means of a field bus system (6), a second data interchange between the bus node (4) and at least one function module (5), in particular by means of a internal bus system (7), and a third data interchange between the function module or modules (5) and at least one function component (15, 17, 18, 19), in particular by means of the internal bus system (7) wherein, from the control device (2) and/or from at least one function module (5) in the form of a safety module (9), data packets (23) and safety-related data packets (24) are provided at the bus node (4) and the bus node (4) passes the safety-related data packets (24) with unchanged content to the safety module (9) or to the control device (2), wherein in the safety module (9) a processing of safety-related data packets (24) takes place in such a way that safety-related data are passed on, in particular via the internal bus system (7), to safety-related function modules (11) and/or to safety-related function components (18) and/or safety-related data from the safety-related function modules (11) and/or from the safety-related function components (18) are held in the safety module (9) in the safety-related data packets (30), in order to transmit the safety-related data packets (30) onwards via the bus node (4) to the control device (2), **characterised in that** the safety module (9), on arrival of a safety-related data packet (24), makes a conversion of the data contained in the data packet (24) between an external safety protocol preset by the control device (2) and an internal safety protocol of the safety-related function modules (11), and then sends out a modified safety-related data packet (28) to the safety-related function module (11) and/or the safety-related function component (18) and/or the control device (2).

9. Method according to claim 8, **characterised in that** the data interchange between the bus node (4) and the function module or modules (5) is effected by means of an internal bus system (7), in which the safety-related and non-safety-related data packets (23, 24, 28, 23) are transmitted in sequence.

10. Method according to claim 8, **characterised in that** the safety module (9) undertakes processing or an automated recognition and processing of safety-related data packets (24), which are coded in accordance with at least two different external safety protocols stored in the safety module.

11. Method according to any of claims 8 to 10, **characterised in that** the safety module (9) provides a runtime environment for a program module, in particular interchangeable, which is designed for processing of the incoming data packets (24).

## Revendications

1. Unité de terrain comprenant un noeud de bus (4), qui est réalisé en vue d'une conversion de signal entre un protocole de bus externe servant à la communication avec un dispositif de commande (2) maître et un protocole de bus interne servant à la communication avec au moins un module fonctionnel (5) de telle manière qu'une transmission séquentielle de paquets de données (27, 28, 29, 30) est mise en oeuvre le long d'un système de bus (5) interne au moyen du protocole de bus interne, et comprenant également des modules fonctionnels (5), qui sont associés au noeud de bus (4) et qui sont réalisés en vue d'un traitement de paquets de données (27, 28, 29, 30), qui sont transmis par l'intermédiaire du système de bus (7) interne, et en vue d'une transmission de signal unidirectionnelle ou bidirectionnelle avec au moins un composant fonctionnel (15 à 19) disposé en aval, dans lequel le noeud de bus (4) est réalisé de telle manière en vue d'une distinction de paquets de données (23, 24) du dispositif de commande (2) maître, que dans le bus de noeud (4), un traitement et/ou un transfert de paquets de données (27) non sécurisés au système de bus (7) interne et un transfert de paquets de données (24) sécurisés au système de bus (7) interne se produit, **caractérisé en ce qu'**au moins un module fonctionnel (5) relié au système de bus (7) interne est réalisé de telle manière sous la forme d'un module de sécurité (9), que dans ledit module fonctionnel, lors d'une arrivée d'un paquet de données (24) sécurisé, une conversion des données contenues dans le paquet de données (24) entre un protocole de sécurité externe spécifié par le dispositif de commande (2) et un protocole de sécurité interne des modules fonctionnels (11) sécurisés se produit et qu'immédiatement après un paquet de données (28) sécurisé modifié est envoyé au module fonctionnel (11) sécurisé et/ou au composant fonctionnel (18) sécurisé et/ou au dispositif de commande (2).

2. Unité de terrain selon la revendication 1, **caractérisée en ce que** les modules fonctionnels (5) sont pourvus respectivement d'interfaces de bus (21) servant à recevoir et à transférer des paquets de données (24, 27, 28, 29, 30), et **en ce que** le module de sécurité (9) est réalisé en vue d'une réception de paquets de données (24, 28, 30) sécurisés, ainsi qu'en vue d'un traitement et d'un transfert de paquets de données (28, 30) traités sécurisés selon le protocole de bus interne par l'intermédiaire du système de bus (7) interne aux modules fonctionnels (11) en particulier sécurisés.

3. Unité de terrain selon la revendication 1 ou 2, **caractérisée en ce que** le module de sécurité (9) présente une interface d'entrée (14) et/ou une interface de sortie pour un couplage direct, unidirectionnel ou bidirectionnel, en particulier électrique et/ou optique, à un composant fonctionnel (15 à 19) disposé en aval.

4. Unité de terrain selon la revendication 1, 2 ou 3, **caractérisée en ce que** le module de sécurité (9) est réalisé en vue d'un traitement d'au moins deux protocoles de sécurité différents.

5. Unité de terrain selon l'une quelconque des revendications précédentes, **caractérisée en ce que** le module de sécurité (9) est réalisé en vue d'un traitement d'un programme informatique pouvant être spécifié librement, sécurisé et/ou en vue de la mise à disposition d'un système d'exécution sécurisé.

6. Unité de terrain selon l'une quelconque des revendications précédentes, **caractérisée en ce que** le module de sécurité (9) est réalisé, en particulier au moyen d'un système d'exécution sécurisé, en vue d'un traitement de signaux de modules fonctionnels (11) sécurisés et/ou de composants fonctionnels (18) et/ou de modules fonctionnels (8, 10, 12) et/ou de composants fonctionnels (15, 17, 19).

7. Unité de terrain selon l'une quelconque des revendications précédentes, **caractérisée en ce que** sont associés, au noeud de bus (4), aussi bien des modules fonctionnels (8, 10, 12), qui sont réalisés conformément à un premier niveau de sécurité d'une norme de sécurité pouvant être spécifiée, qu'au moins un module de sécurité (9), qui est réalisé conformément à un deuxième niveau de sécurité de la norme de sécurité pouvant être spécifiée, dans laquelle le deuxième niveau de sécurité est configuré pour une sécurité plus élevée que le premier niveau de sécurité.

8. Procédé servant à faire fonctionner un système d'automatisation, dans lequel sont prévus un premier échange de données entre un dispositif de commande (2) maître et un noeud de bus (4), en particulier au moyen d'un système de bus de terrain (6), un deuxième échange de données entre le noeud de bus (4) et au moins un module fonctionnel (5), en particulier au moyen d'un système de bus (7) interne, et un troisième échange de données entre l'au moins un module fonctionnel (5) et au moins un composant fonctionnel (15, 17, 18, 19), en particulier au moyen du système de bus (7) interne, dans lequel des paquets de données (23) ainsi que des paquets de données (24) sécurisés sont mis à disposition du noeud de bus (4) par le dispositif de commande (2) et/ou par au moins un module fonctionnel (5) réalisé sous la forme d'un module de sécurité (9) et le noeud de bus (4) transfère les paquets de données (24) sécurisés, dont le contenu est inchangé, au module de sécurité (9) ou au dispositif de commande (2), dans lequel un traitement de paquets de données (24) sécurisés a lieu dans le module de sécurité (9) de telle manière que des données sécurisées sont transférées, en particulier par l'intermédiaire du système de bus (7) interne, aux modules fonctionnels (11) sécurisés et/ou aux composants fonctionnels (18) sécurisés et/ou que des données sécurisées sont reçues, par les modules fonctionnels (11) sécurisés et/ou par les composants fonctionnels (18) sécurisés dans le module de sécurité (9), dans les paquets de données (30) sécurisés afin de transférer les paquets de données (30) sécurisés par l'intermédiaire du noeud de bus (4) au dispositif de commande (2), **caractérisé en ce**
**que** le module de sécurité (9) met en oeuvre, lors d'une arrivée d'un paquet de données (24) sécurisé, une conversion des données contenues dans le paquet de données (24) entre un protocole de sécurité externe spécifiée par le dispositif de commande (2) et un protocole de sécurité interne des modules fonctionnels (11) sécurisés, et envoie immédiatement après un paquet de données (28) sécurisé modifié au module fonctionnel (11) sécurisé et/ou au composant fonctionnel (18) sécurisé et/ou au dispositif de commande (2).

9. Procédé selon la revendication 8, **caractérisé en ce que** l'échange de données entre le noeud de bus (4) et l'au moins un module fonctionnel (5) est effectué au moyen d'un système de bus (7) interne, dans lequel des paquets de données (23, 24, 28, 30) sécurisés et non sécurisés sont transmis de manière séquentielle.

10. Procédé selon la revendication 8, **caractérisé en ce que** le module de sécurité (9) met en oeuvre un traitement ou une identification et un traitement automatiques de paquets de données (24) sécurisés, qui sont codés conformément à l'un parmi au moins deux protocoles de sécurité externes différents mémorisés dans le module de sécurité.

11. Procédé selon l'une quelconque des revendications 8 à 10, **caractérisé en ce que** le module de sécurité (9) met à disposition un environnement d'exécution pour au moins un module de programme en particulier interchangeable, qui est réalisé aux fins du traitement des paquets de données (24) arrivant.
